# EUROPÄISCHE PATENTSCHRIFT

(11) **EP 2 340 976 B1**
(45) Veröffentlichungstag und Bekanntmachung des Hinweises auf die Patenterteilung: **10.12.2014**
(21) Anmeldenummer: 10015760.1
(22) Anmeldetag: 17.12.2010
(51) Int. Cl.: B60W 40/08, B60W 50/08, B60R 16/023

(54) **Verfahren zum Betrieb eines Fahrerassistenzsystems eines Kraftfahrzeugs und Kraftfahrzeug**
Method for operating a driver assistance system of a motor vehicle and motor vehicle
Procédé destiné au fonctionnement d'un système d'assistance du conducteur d'un véhicule automobile et véhicule automobile

(30) Priorität: 04.01.2010 DE 102010003985
(43) Veröffentlichungstag der Anmeldung: 06.07.2011
(73) Patentinhaber: Audi AG, 85045 Ingolstadt (DE)
(72) Erfinder: Freyer, Jörn, Dr., 81827 München (DE); Hantschke, Christopher, 85080 Gaimersheim (DE); Schindler, Andreas, 85055 Ingolstadt (DE); Ullmann, Stefan, 80797 München (DE); Stadel, Benjamin, 85051 Ingolstadt (DE); Kastl, Andreas, 85092 Kösching (DE); Brenneis, Oliver, 85748 Garching (DE)
(74) Vertreter: Thielmann, Frank

(56) Entgegenhaltungen:
- EP-A1- 1 811 481
- EP-A1- 2 055 601
- EP-A2- 0 984 260
- EP-A2- 1 182 089
- EP-A2- 1 870 674
- EP-B1- 1 660 354
- DE-A1- 10 323 723
- DE-A1-102004 030 997

## Beschreibung

Die Erfindung betrifft ein Verfahren zum Betrieb eines Fahrerassistenzsystems eines Kraftfahrzeugs, bei welchem anhand wenigstens eines Sensors die aktuelle Fahrsituation beschreibende Fahrzeugdaten ermittelt werden, unter Berücksichtigung welcher Fahrzeugdaten ein aktueller fahrdynamischer Grenzbereich des Kraftfahrzeugs ermittelt wird, der als Grundlage für eine an den Fahrer ausgebbare Fahrempfehlung verwendet wird, sowie ein zugehöriges Kraftfahrzeug.

Mit jeder neuen Fahrzeuggeneration werden die Fahrwerke optimiert und der physikalische Grenzbereich des Kraftfahrzeugs wird erweitert. Der physikalische bzw. fahrdynamische Grenzbereich gibt dabei an, bis zu welchem die aktuelle Fahrsituation, also die Fahrdynamik, beschreibenden Parametern eine uneingeschränkte Kontrolle über das Kraftfahrzeug erhalten bleibt. Neben dem die Fahrdynamik des Kraftfahrzeugs selbst beschreibenden Parametern haben hierauf folglich auch Umgebungsparameter Einfluss, beispielsweise der Straßenzustand, die Wetterverhältnisse oder dergleichen. Die gesteigerte Leistungsfähigkeit des Kraftfahrzeugs (Performance) wird dabei beworben und beispielsweise von Fachjournalisten getestet und bewertet.

Angeregt durch entsprechende Werbung und Berichte von Fachjournalisten steigt das Interesse der Kunden, also letztlich des Fahrers, an der gesteigerten Kraftfahrzeug- und insbesondere der Fahrwerksleistung. Studien zeigen jedoch, dass nur ein sehr begrenzter Fahrerkreis wirklich in der Lage ist, die Unterschiede herauszufahren, da die meisten Kunden bei Annäherung an den physikalischen Grenzbereich des Kraftfahrzeugs unsicher werden und häufig die notwendige Erfahrung, teilweise auch die Fertigkeiten, fehlen. Somit bleibt das gesteigerte Fahrvergnügen den meisten Kunden verwehrt.

Zudem besteht das Problem, dass Fahrer heutiger Kraftfahrzeuge mit zunehmend komplexeren Fahrsituationen und einer Vielzahl von Funktionen umgehen müssen. Dabei kann es zu Überforderung und Fehlverhalten in komplexen Situationen, aber auch zu einer ineffizienten Systemnutzung kommen. Dies liegt häufig darin begründet, dass die Funktionen verschiedener Fahrzeugsysteme selbst sehr komplex sind und teilweise erst erlernt werden müssen, wofür beispielsweise Probefahrten nicht ausreichend sind.

In der DE 10 2005 055 744 A1 wird ein Fahrerassistenzsystem für Kraftfahrzeuge vorgeschlagen, welches ein Informationssystem zur Erfassung von Daten über die Verkehrsinfrastruktur und den Zustand des Fahrzeuges und eine Ausgabeeinrichtung zur Ausgabe von Informationen an den Fahrer umfasst. Dabei ist ein Dynamikmodul vorgesehen, das anhand der vom Informationssystem gelieferten Daten einen Dynamikverlauf für das Fahrzeug berechnet und eine Empfehlungseinrichtung, die anhand des Dynamikverlaufs Hinweise zur Führung des Fahrzeugs erzeugt und über die Ausgabeeinrichtung ausgibt. Beispielsweise kann ein optimaler Fahrkurs (Ideallinie) sowie ein optimaler Dynamikverlauf und gegebenenfalls auch eine optimale Fahrzeugkonditionierung (beispielsweise Getriebestufe) ermittelt werden. Hieraus werden letztlich Fahrempfehlungen ermittelt und an den Fahrer ausgegeben.

Fahrempfehlungen im Rahmen dieser Beschreibung sind als an den Fahrer gerichtete Informationen zu verstehen, die wenigstens eine Bedienaktion des Fahrers nahelegen. Bei einer solchen Bedienaktion kann es sich um einen Lenkvorgang, einen Schaltvorgang, einen Bremsvorgang oder dergleichen handeln, selbstverständlich ist es jedoch auch denkbar, dass insbesondere auf das Fahrwerk bezogene andere Fahrzeugsysteme eingestellt werden sollen.

Die DE 10 2005 055 744 A1 schlägt hierzu beispielsweise vor, als Informationen die Wahl der optimalen Getriebestufe für die Kurvendurchfahrt, eine optimale Geschwindigkeit, die Richtung der Kurve, den Kurvencharakter, den Bremspunkt oder dergleichen anzugeben. Es können auch ständig Fahrempfehlungen ausgegeben werden, beispielsweise der optimale Lenkeinschlag, beispielsweise durch Anzeige einer relativen Lenkrichtungskorrektur, die Angabe der optimalen Geschwindigkeit, die Angabe des Bremspunktes, die Angabe der optimalen Getriebestufe, die Kurvenrichtung und Kurvencharakter.

Als Eingangsdaten können dabei Sensordaten und/oder Daten weiterer Fahrzeugsysteme dienen, beispielsweise die Motordrehzahl, die gewählte Getriebestufe, die Geschwindigkeit, die Raddrehzahlen, Lenkwinkel, Gierraten, Längs-, Quer- oder Winkelbeschleunigungen oder Daten eines elektronischen Stabilitätssystems (ESP). Auch Umgebungsdaten können berücksichtigt werden, beispielsweise Daten eines Navigationssystems oder von Umgebungssensoren wie Videokamera, Radar- und/oder Lidar-Sensoren. Auch der Straßenzustand kann berücksichtigt werden, beispielsweise bei einem Regensensor.

Ein solches System gibt dem Fahrer die Möglichkeit, die Fahrdynamik besser an die Verkehrssituation und den Straßenverlauf anzupassen und gegebenenfalls eine bessere Ausnutzung der Fahrzeugleistung, insbesondere der Fahrwerksleistung, innerhalb des fahrdynamischen Grenzbereichs zu erreichen. Jedoch stellt ein solches System weder auf den konkreten Fahrerwunsch noch auf dessen individuelle Eigenschaften ab, so dass die Akzeptanz des Systems fraglich ist.

DE 103 23 723 A1 offenbart eine Einrichtung zum individuellen Einstellen von fahrdynamischen Eigenschaften eines Kraftfahrzeugs. Es wird vorgeschlagen, Fahrzeugparameter entsprechend des fahrerischen Könnens des Fahrers vorzugeben, um insbesondere ungeübte und/oder unsichere Fahrer aktiv vor kritischen Fahrsituationen zu bewahren. Vorgegeben werden sollen fahrdynamische Eigenschaften des Kraftfahrzeugs, die eingegeben werden können. Über eine Informationseinheit kann über die eingestellten Fahrzeugparameter informiert werden.

EP 1 870 674 A2 betrifft eine Vorrichtung und ein Verfahren zur Kurvenvorwarnung. Dabei wird anhand der Krümmung einer Strecke, welche aus Kartendaten ermittelt wird, und einer vorzugsweise von einem Bediener mittels Eingabemitteln eingebbarem Eingabewerten eine Kurvensollgeschwindigkeit als Empfehlung berechnet und angezeigt. Ziel soll es sein, die fahrerseitigen Kenngrößen, wie Fahrstil, individuell berücksichtigen zu können. Die Berechnung der Kurvensollgeschwindigkeit kann auch unter Berücksichtung von Umfeldinformationen erfolgen.

EP 1 811 481 A1 offenbart ein Verfahren und ein System zur Überwachung und Analyse eines Ziels eines Fahrers. Damit soll ein Fahrer darin trainiert werden, beispielsweise sicher und ökonomisch zu fahren. Letztlich geht es also darum, über eine längere Zeit den Fahrer zu überwachen und ihm Feedback zu geben, wobei es insbesondere um eine Bestrafung oder Belohnung des Fahrers geht. Das erstellte Fahrerprofil kann an den Fahrer ausgegeben werden, so dass nützliche Information an den Fahrer ausgegeben wird, mithilfe derer dieser in der Zukunft seinen Fahrstil verbessern kann.

EP 0 984 260 A2 betrifft ein Verfahren zur Analyse und zur Beeinflussung des Fahrverhaltens von Kraftfahrzeugen, konkret die Problematik, dass die Wunschvorstellungen und Anforderungen unterschiedlicher Fahrer in Bezug auf die Fahrbarkeit eines Fahrzeugs nicht exakt gleich sind. Mithin soll bei der Ermittlung der Fahrbarkeit auch die Versuchsperson durch aus der selben Datenbasis ableitbare Variablen charakterisiert werden, beispielsweise auch deren Grad der Fahrzeugbeherrschung. Es kann ein Index ermittelt und angezeigt werden, welcher angibt, wie weit der Fahrer in seinen persönlichen Grenzbereich vorgedrungen ist.

Der Erfindung liegt daher die Aufgabe zugrunde, ein Verfahren zum Betrieb eines Fahrerassistenzsystems anzugeben, welches besser auf den individuellen Fahrer und seine aktuellen Wünsche eingehen kann.

Zur Lösung dieser Aufgabe sind bei einem Verfahren der eingangs genannten Art erfindungsgemäß die Merkmale des Anspruchs 1 vorgesehen. Dabei kann insbesondere vorgesehen sein, dass ein fahrerspezifischer, verkleinerter fahrdynamischer Grenzbereich ermittelt wird.

Das erfindungsgemäße Verfahren baut also auf auf einem System, wie es einleitend bereits beschrieben wurde, auf, das Sensordaten und/oder Daten von Fahrzeugsystemen auswertet, um durch eine Datenfusion dieser die aktuelle Fahrsituation beschreibenden Fahrzeugdaten zunächst den aktuellen fahrdynamischen Grenzbereich des Kraftfahrzeug zu ermitteln. Dieser wird üblicherweise durch Schwellwerte für fahrdynamische Größen bestimmt sein, die nicht überschritten werden sollten - er gibt also die rein technisch mögliche Leistungsfähigkeit des Kraftfahrzeugs in der aktuellen Fahrsituation an. Sind diese Grenzen, die nicht überschritten werden sollten, erst bekannt, so entsteht letztlich ein "Raum", der angibt, welche Werte für diverse Fahrdynamikparameter eingenommen werden dürfen. Auf dieser Basis kann nun eine Fahrempfehlung, also eine Information, die den Fahrer zu einer auf die Fahrt des Kraftfahrzeugs bezogenen Bedienaktion anregt, ermittelt werden. So ist es beispielsweise möglich, Fahrempfehlungen zu erzeugen, mit denen der Fahrer das gesamte Leistungsspektrum des Kraftfahrzeugs ausnutzen kann.

Erfindungsgemäß wird nun jedoch vorgeschlagen, die Ermittlung der Fahrempfehlung direkt oder indirekt über eine Anpassung des fahrdynamischen Grenzbereichs so zu modifizieren, dass auf den individuellen Fahrer und seine Wünsche eher eingegangen werden kann. Dabei kann zum einen vorgesehen sein, dass den aktuellen Zustand und/oder das Können das Fahrers beschreibende Fahrerdaten berücksichtigt werden. In einem solchen Fall kann beispielsweise vorgesehen sein, dass bei einem müden Fahrer oder einem als Fahranfänger zu klassifizierenden Fahrer eher ein verkleinerter Grenzbereich angesetzt wird, um der Sicherheit und dem Fahrempfinden des Fahrers besser zuzutragen. Auch Komfortkriterien können dabei im Übrigen berücksichtigt werden, wenn sich beispielsweise aus den Fahrerdaten ergibt, dass der Fahrer eher einen weicheren oder sanfteren Fahrstil bevorzugt.

Unter Berücksichtigung der Fahrerdaten kann der Fahrer schrittweise, je nach Fahrkönnen, sich an den Grenzbereich eines Kraftfahrzeuges annähern und sein persönliches Fahrkönnen verbessern. So wird ihm die Fahrdynamik seines Kraftfahrzeugs, insbesondere also seine Leistungsfähigkeit, auf eine sichere Weise nähergebracht und er kann eine gesteigerte Fahrzeugperformance erleben. Auf diese Weise steigt auch die Bereitschaft, für gesteigerte Fahrzeugperformance mehr Geld zu bezahlen.

Neben den Fahrerdaten an sich kann auch ein Optimierungskriterium berücksichtigt werden, welches insbesondere einem Fahrerwunsch entspricht. Durch die ausgegebenen Fahrempfehlungen fungiert das Fahrerassistenzsystem in einem solchen Fall letztlich als ein virtueller Fahrtrainer, der dem Fahrer interaktiv in relevanten Fahrsituationen erklärt, wie beispielsweise möglichst sparsam, möglichst dynamisch oder möglichst komfortabel gefahren werden kann. Sparsamkeit, Dynamik, Komfortabilität, Fahrspaß, Effizienz und dergleichen sind allesamt Optimierungskriterien, auf die hin die Fahrempfehlung beziehungsweise der fahrdynamische Grenzbereich modifiziert werden kann. Insbesondere in diesem Fall, aber auch bei der Berücksichtigung von Fahrerdaten, werden die ausgegebenen Fahrempfehlungen unter anderem daraufhin zielen, auch Betriebsparameter anderer Fahrzeugsysteme, insbesondere auch anderer Fahrerassistenzsysteme, entsprechend anzupassen. In beiden Fällen übt das Fahrerassistenzsystem eine Lehrfunktion aus, indem dem Fahrer während Nutzensituationen Hinweise zur Verbesserung seiner Fahrweise gegeben werden. Eine derartige Beratung kann dabei, wie bereits erwähnt, anhand von verschiedenen Optimierungskriterien, beispielsweise Fahrspaß, Fahrkomfort, Effizienz und dergleichen, aber auch individuell auf den Fahrer, also sein Fahrkönnen und seinen Zustand, zugeschnitten, erfolgen. Beispielsweise beschreiben die Fahrempfehlungen also, wie sich der Fahrer noch effizienter verhalten kann.

Die Fahrempfehlungen können dabei optisch ausgegeben werden, beispielsweise auf einem Bildschirm oder einem Head-Up-Display, jedoch auch akustisch als Sprachhinweise und/oder haptisch. Denkbar ist auch, worauf im Folgenden noch näher eingegangen wird, dass ein direkter Eingriff in ein Fahrzeugsystem erfolgt, das erklärt werden soll. Denkbar ist auch eine Variante, indem durch die Fahrempfehlung einem Fahrer eine veränderte Einstellung oder ein Fahreingriff empfohlen wird und dieser, beispielsweise über ein Bedienelement, diesen Vorschlag übernehmen kann. So ist es beispielsweise möglich, dass während der Fahrt dem Fahrer vorgeschlagen wird, die Dämpfer oder die Gaspedalkennlinie zu verstellen, woraufhin dieser die Verstellung selbst vornehmen kann oder auch einfach bestätigen kann, woraufhin das Fahrerassistenzsystem selbst die notwendigen Einstellungen vornimmt.

Gerade bei Verwendung eines Optimierungskriteriums, also eines Fahrerwunsches, kann das Fahrerassistenzsystem beispielsweise ein zentrales Koordinationsmodul umfassen, dem die verschiedenen Fahrzeugsysteme ihren aktuellen Systemzustand als Systemzustandsdaten zur Verfügung stellen. Das zentrale Koordinatenmodul ordnet diese Informationen dem fahrerseitig ausgewählten Optimierungskriterium (beispielsweise Fahrdynamik, Fahrkomfort, Verbrauch ...) zu. Hieraus abgeleitet werden dann die Handlungsanweisungen, also die Fahrempfehlung, beziehungsweise die Informationen an den Fahrer, welche insbesondere auch zu einem Lerneffekt führen.

In diesem Zusammenhang sei noch daraufhingewiesen, dass die Reaktion des Fahrers oder allgemein auch das Fahrverhalten des Fahrers selbstverständlich über die Zeit auch in dem Sinne betrachtet werden kann, dass entsprechende Fahrerdaten aktuell gehalten werden können und sich der Fahrer durch das Lernen mit der Zeit auch neue Fahrzeugfunktionen beziehungsweise Dynamiklevels oder dergleichen freischalten kann.

In weiterer Ausbildung des erfindungsgemäßen Verfahrens kann vorgesehen sein, dass der aktuelle Fahrer, dem insbesondere wenigstens ein gespeichertes, sein Fahrkönnen beschreibendes Fahrerdatum, insbesondere ein Evaluationswert, zugeordnet ist, über eine Identifikationseinrichtung identifiziert wird und/oder wenigstens ein oder das das Fahrkönnen des Fahrers beschreibendes Fahrerdatum unter Berücksichtigung einer Eingabe und/oder einer Fahrerhistorie ermittelt wird. Es kann also vorgesehen sein, dass, um die fahrerspezifische Anpassung von Fahrempfehlungen zu ermöglichen, der Fahrer über eine Identifikationseinrichtung identifiziert wird. Hierfür können bekannte Möglichkeiten genutzt werden, beispielsweise personalisierte Schlüssel, die Auswertung von Bildern einer Innenraumkamera, Fingerabdrucksensoren, die Eingabe eines Codes an einem Mensch-Maschine-Interface (MMI) und dergleichen. Dem Fahrer kann dabei wenigstens ein Fahrerdatum zugeordnet sein, das sein Fahrkönnen beschreibt. Dabei kann es sich um einen Evaluationswert handeln, der beispielsweise aus dem Fahrverhalten des Fahrers in der Vergangenheit, insbesondere also einer Fahrerhistorie, geschlussfolgert wird und ständig aktuell gehalten wird. Denkbar ist selbstverständlich auch, dass das Fahrkönnen des Fahrers unter Berücksichtigung einer Eingabe, beispielsweise wiederum an einem Mensch-Maschine-Interface, ermittelt wird. Diese Eingabe muss nicht durch den Fahrer selber erfolgen, es ist auch denkbar, dass beispielsweise ein Fahrzeugbesitzer, der einen Fahranfänger mit seinem Kraftfahrzeug fahren lassen möchte, diese Information vorab eingibt. Beliebige Ausgestaltungen sind hier denkbar.

Zweckmäßigerweise können den Zustand des Fahrers beschreibende Fahrerdaten durch Auswertung von Sensordaten, insbesondere von Daten einer Innenraumkamera und/oder physiologischen Sensoren und/oder akustischen Sensoren, und/oder von aktuellen Einstellungen und/oder Eingaben des Fahrers und/oder von einer einen vorbestimmten Zeitbereich vor dem aktuellen Zeitpunkt umfassenden Fahrerhistorie ermittelt werden. Grundsätzlich sind Möglichkeiten, den Zustand des Fahrers, insbesondere also beispielsweise seine aktuelle Befindlichkeit und/oder seine Aufmerksamkeit, zu ermitteln, weithin bekannt, so dass hierauf an dieser Stelle nicht näher eingegangen werden soll.

In vorteilhafter weiterer Ausgestaltung kann vorgesehen sein, dass in Abhängigkeit des fahrdynamischen Grenzbereichs und/oder der Fahrerdaten die Fahrzeugleistung betreffende Betriebsparameter des Kraftfahrzeugs, insbesondere die Motorleistung und/oder Fahrwerkseinstellungen und/oder wenigstens eine Kennlinie eines Pedals und/oder das Bremsverhalten, angepasst werden. In diesem Fall kann das Fahrerassistenzsystem also selbst Eingriffe vornehmen, um beispielsweise dem Fahrer bei steigendem Fahrkönnen beziehungsweise aufmerksameren Zustand mehr Leistungsmerkmale zur Verfügung zu stellen. Selbstverständlich können auch Fahrzeugsysteme an- und abgeschaltet werden, soweit dies einer Anpassung an das Fahrkönnen zuträglich ist. Auch eine allgemeine Anpassung an die aktuelle Fahrsituation kann jedoch erfolgen. So kann beispielsweise das aktive Fahrwerk durch Umschalten der Dämpfer von weich auf hart angepasst werden, die Lenkungsunterstützung und -übersetzung können genau wie die Gaspedal- und Bremskennlinie angepasst werden, ESP-Regelschwellen und das ESP-Verhalten (früher oder später Eingriff) können genauso angepasst werden wie das Schaltverhalten des Automatikgetriebes. Somit stehen dem Fahrerassistenzsystem also Möglichkeiten offen, die Fahrzeugperformance auf die Fahrerdaten anzupassen, so dass sich ein Fahrer beispielsweise mit der Zeit weitere Funktionen "freifahren" kann und/oder näher an den physikalischen Grenzbereich geführt wird.

In einer bevorzugten Ausführungsform kann vorgesehen sein, dass beim Fahren einer vorbestimmten Strecke in dem Kraftfahrzeug gespeicherte streckenspezifische Streckendaten und aktuelle Positionsdaten, insbesondere GPS- oder dGPS-Daten, zur Ermittlung des aktuellen fahrdynamischen Grenzbereichs und/oder der Fahrempfehlung berücksichtigt werden. Dabei kann es sich selbstverständlich um aus einem Navigationssystem oder dergleichen bezogene Streckendaten handeln, die berücksichtigt werden, mit besonderem Vorteil können die Streckendaten tatsächlich auf eine vorbestimmte Strecke bezogen sein, die durch das Kraftfahrzeug nachzufahren ist, was im Folgenden näher erläutert werden soll.

So kann nämlich das Fahrerassistenzsystem als ein Fahrdynamiktrainer genutzt werden, der dem Kunden auf ausgewählten Strecken, beispielsweise auf einem Rennkurs, entscheidende Kenngrößen für das Fahrzeughandling zur Verfügung stellt. Dabei kann insbesondere vorgesehen sein, dass für jede derartige vorbestimmte Strecke, die erfasst ist, eine maßgeschneiderte Fahrzeugabstimmung vorliegt. Es liegt also ein Satz von Betriebsparametern für die verschiedenen Fahrzeugsysteme vor, beispielsweise Fahrwerkseinstellungen und dergleichen, die an die vorbestimmte Strecke angepasst sind, also in den Streckendaten enthalten sind. Bevor der Fahrer die Strecke abfährt, werden automatisch diese Einstellungen vorgenommen.

Dabei kann mit besonderem Vorteil vorgesehen sein, dass wenigstens ein Teil der Streckendaten in einer Simulation und/oder einer Testfahrt ermittelt wurden. Beispielsweise können die passenden Bremspunkte, eine Ideallinie, Lenkwinkelverläufe, Beschleunigungen und dergleichen in einer Fahrsimulation berechnet werden und dann mit aufgezeigten Daten von Rennfahrern abgeglichen werden, wobei allerdings ein gewisser Sicherheitsfaktor vorzuhalten ist. Zur Datenaufzeichnung muss ein Rennfahrer oder Fahrtrainer die Strecke mit einem vergleichbaren Kraftfahrzeug abfahren. Im erfindungsgemäßen Verfahren werden jedoch diese letztlich eine ideale Ausnutzung der Fahrzeugdynamik beschreibenden Streckendaten nicht unmittelbar zur Ermittlung der Fahrempfehlung hergenommen, sondern es folgt eine Anpassung aufgrund der Fahrerdaten und/oder dem Optimierungskriterium. Ein Fahrer kann also eine vorbestimmte Strecke, beispielsweise eine Rennstrecke abfahren, und wird dabei über die Fahrempfehlung individuell beraten, wobei Daten eines professionellen Fahrers/oder einer Fahrsimulation zugrunde liegen. So wird dem Fahrer nicht nur ermöglicht, im Rahmen seines Könnens und seiner aktuellen Fähigkeiten die Fahrdynamik seines Kraftfahrzeugs voll auszukosten, es tritt zudem noch ein Lerneffekt auf.

Denkbar ist es im Rahmen des erfindungsgemäßen Verfahrens auch, dass für verschiedene vorbestimmte Strecken Sätze von Streckendaten zur Verfügung stehen, die in das Kraftfahrzeug beziehungsweise das Fahrerassistenzsystem eingespeichert werden können. Denkbar ist es hier beispielsweise, dass für ausgewählte Strecken Streckendaten online zur Verfügung gestellt werden und von dort heruntergeladen werden können. Über ein Interface ist es möglich, die Streckendaten in das Fahrzeug zu laden, wobei das Interface beispielsweise eine DVD, ein Anschluss für ein Multimediagerät, eine Internetverbindung, eine USB-Schnittstelle oder dergleichen sein kann.

Es ist vorgesehen, dass eine von einer Ideallinie abweichende, fahrdynamisch interessante Route insbesondere unter Berücksichtigung von Streckendaten und/oder eines Fahrerwunsches ermittelt und bei der Ermittlung der Fahrempfehlung berücksichtigt wird. Im Bereich der Navigation kann mithin von der Ideallinie abgewichen werden, um dem Fahrer auf verbesserte Art und Weise die fahrdynamischen Eigenschaften eines Kraftfahrzeugs erlebbar zu machen.

In weiterer Ausgestaltung der vorliegenden Erfindung kann vorgesehen sein, dass wenigstens ein einer Fahrempfehlung entsprechender Fahreingriff wenigstens teilweise, insbesondere abhängig von einem vor der aktuellen Fahrt durch den Fahrer definierten Konfigurationsparameter, kraftfahrzeugseitig automatisch durchgeführt wird und/oder während der Fahrt eine Anpassung von Betriebsparametern unter Berücksichtigung von Fahrzeugdaten und/oder Streckendaten und/oder des Optimierungskriteriums automatisch erfolgt und/oder dem Fahrer als Option vorgeschlagen wird. Dabei kann zu Lehrzwecken eine aus der Fahrempfehlung abgeleitete Information dennoch ausgegeben werden, es ist aber auch möglich, die Ausgabe zu unterdrücken, beispielsweise, wenn hauptsächlich ein der Sicherheit dienender Fahreingriff vorgenommen wird. Bei aufgrund von Optimierungskriterien vorgenommenen Veränderungen oder Vorschlägen sollte jedoch auf jeden Fall eine Information des Fahrers erfolgen. Auf diese Weise wird die Funktion des Fahrerassistenzsystems als "virtueller Fahrtrainer" unterstützt, indem dem Fahrer interaktiv in den relevanten Fahrsituationen auch erläutert werden kann, warum die Änderungen vorgenommen werden und inwiefern sie dementsprechenden Optimierungskriterien zuträglich sind.

Als besonders vorteilhaft erweist sich jedoch eine Ausgestaltung, in der Fahreingriffe und/oder eine Anpassung von Betriebsparametern während der Fahrt zumindest teilweise automatisch erfolgen können, bei einer Verwendung des Fahrerassistenzsystems als Fahrdynamiktrainer, wie oben beschrieben. Auf diese Weise kann letztlich eine Art "Arcade-Funktion" realisiert werden. In einer solchen Ausgestaltung kann der Fahrer das Kraftfahrzeug äußerst fahrdynamisch bewegen, wobei das Kraftfahrzeug selbsttätig Teilfunktionen übernimmt, um den Fahrer zu entlasten beziehungsweise näher an den fahrdynamischen Grenzbereich heranzuführen. Dem Fahrer kann also die Möglichkeit geboten werden, dass das Fahrzeug die Regelung einiger Stellgrößen autonom durchführt. Das Kraftfahrzeug übernimmt beispielsweise die Gangwahl und der Fahrer muss sich nur noch auf das Beschleunigen, Bremsen und Lenken konzentrieren. Dies kann soweit automatisiert werden, dass das Kraftfahrzeug vollständig autonom über die ausgewählte vorbestimmte Strecke fährt. Aber auch Zwischenstufen sind realisierbar: der Fahrer bestimmt den Bremspunkt oder Einlenkpunkt (quasi als Trigger), Bremsdruckverlauf oder Lenkwinkelverlauf werden jedoch vom Kraftfahrzeug vorgegeben und Fahreingriffe entsprechend durchgeführt.

Der aktive Eingriff ins Fahrgeschehen kann dabei durch bereits im Kraftfahrzeug verbaute Aktoren, wie sie beispielsweise für das autonome Einparken, Stauassistenten, aber auch bestimmte Fahrwerkprogramme etc. genutzt werden, realisiert werden.

Allgemein kann wenigstens ein Optimierungskriterium durch einen Fahrer ausgewählt werden und/oder anhand der Fahrerdaten ermittelt und ausgewählt werden, insbesondere nach einer Bestätigung durch den Fahrer. Die Auswahl, wohingehend der Fahrer durch das erfindungsgemäße Fahrerassistenzsystem unterstützt werden soll, kann dieser also beispielsweise per Menü am Mensch-Maschine-Interface oder sogar über eine Sprachsteuerung auswählen. Denkbar ist jedoch auch, dass das Optimierungskriterium letztlich aus den Fahrerdaten geschlussfolgert werden kann. Beispielsweise kann ein bevorzugter Fahrstil oder ein bestimmter Fahrerzustand ermittelt werden, der auf einen bestimmten Fahrerwunsch bezüglich des Optimierungskriteriums hinweist. Es erfolgt dann nur noch eine Ausgabe, die der Fahrer über ein Bedienelement bestätigen kann.

Weiterhin kann vorgesehen sein, dass als ein zur Ausgabe der Fahrempfehlung oder einer daraus abgeleiteten Information geeignetes Darstellungsmittel eine Projektionseinrichtung verwendet wird, die die Fahrempfehlung oder eine daraus abgeleitete Information auf die Straße vor dem Kraftfahrzeug projiziert. So ist es beispielsweise denkbar, eine Ideallinie, ein Ghost-Kraftfahrzeug oder dergleichen auf die Straße vor dem Kraftfahrzeug zu projizieren. Auf diese Weise wird eine besonders eingängige Darstellung für den Fahrer ermöglicht. Er kann somit besonders gut der Ideallinie folgen. Ein Ghost-Kraftfahrzeug kann beispielsweise so projiziert werden, dass der Fahrer diesem lediglich noch hinterherfahren muss, um eine besonders vorteilhafte Fahrdynamik erleben zu können. Auch können beispielsweise ideale Bremspunkte und/oder Lenkeinschlagpunkte entlang einer auf die Straße projizierten Ideallinie markiert werden.

Es ist ein Kraftfahrzeug mit einem Fahrerassistenzsystem denkbar, welches ein zur Durchführung des erfindungsgemäßen Verfahrens ausgebildetes Steuergerät umfasst. Das Steuergerät sammelt mithin Sensordaten und Daten weiterer Fahrzeugsysteme als Fahrzeugdaten, um hieraus wie beschrieben einen fahrdynamischen Grenzbereich und daraus eine Fahrempfehlung zu ermitteln, wobei der individuelle Fahrer beziehungsweise ein Fahrerwunsch berücksichtigt werden können. Ein solches Fahrerassistenzsystem kann beispielsweise als Fahrdynamiktrainer oder virtueller Fahrlehrer fungieren.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein Kraftfahrzeug, und
- Fig. 2: eine Prinzipskizze zum erfindungsgemäßen Verfahren.

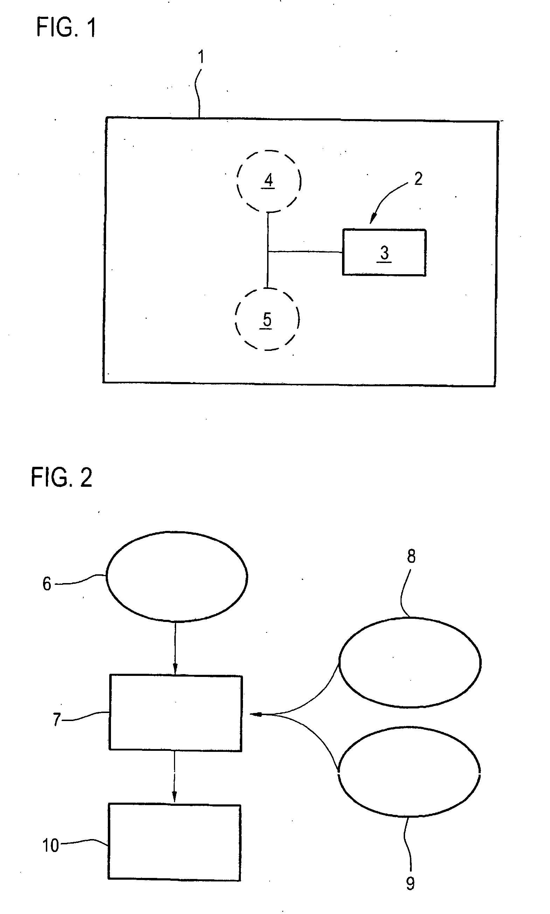

Fig. 1 zeigt ein Kraftfahrzeug 1. Es umfasst eine Fahrerassistenzsystem 2 mit einem Steuergerät 3, welches zur Durchführung des erfindungsgemäßen Verfahrens ausgebildet ist.

Dazu steht das Steuergerät 3 über einen Fahrzeugbus, beispielsweise einen CAN-Bus, in Verbindung mit verschiedenen Sensoren 4 und weiteren Fahrzeugsystemen 5.

Die Sensordaten sowie Daten der Fahrzeugsysteme 5 bilden Fahrzeugdaten, die den aktuellen Zustand des Kraftfahrzeugs 1 beschreiben. Hieraus abgeleitet werden kann ein aktueller fahrdynamischer Grenzbereich des Kraftfahrzeugs 1, der als Grundlage für eine an den Fahrer ausgebbare Fahrempfehlung verwendet wird. Dabei ist beim Fahrerassistenzsystem 2 zusätzlich vorgesehen, dass der aktuelle fahrdynamische Grenzbereich und/oder die Fahrempfehlung noch unter Berücksichtigung von Fahrerdaten oder wenigstens eines Optimierungskriteriums angepasst werden. Die Fahrerdaten beschreiben dabei den aktuellen Zustand und/oder das Können des Fahrers, während das Optimierungskriterium insbesondere auf einen Fahrerwunsch gerichtet ist, beispielsweise möglichst komfortabel, schnell oder kraftstoffsparend zu fahren.

Fig. 2 zeigt das Grundprinzip des erfindungsgemäßen Verfahrens in einer Prinzipskizze. Wie grundsätzlich bekannt, werden die Fahrzeugdaten 6 verwendet, um, Schritt 7, einen aktuellen fahrdynamischen Grenzbereich und daraus eine Fahrempfehlung, die an den Fahrer auszugeben ist, zu ermitteln. Dabei werden allerdings beim erfindungsgemäßen Verfahren nicht nur die Fahrzeugdaten 6 berücksichtigt, sondern zusätzlich noch die Fahrerdaten 8 und das wenigstens eine Optimierungskriterium 9. Auf diese Weise kann individuell angepasst und auf den aktuellen Zustand/Wunsch des Fahrers bezogen eine veränderte Fahrempfehlung erzeugt werden, die der Sicherheit zuträgt und das Fahrgefühl des Fahrers verbessert. Die Fahrempfehlung wird dann, wie bekannt, in einem Schritt 8 ausgegeben, beispielsweise über einen Bildschirm, über ein Head-Up-Display oder eine Projektionseinrichtung, die beispielsweise eine Ideallinie oder dergleichen unmittelbar auf die Straße projizieren kann.

Zwei besondere Ausführungsformen des erfindungsgemäßen Verfahrens soll nun im Folgenden als Ausführungsbeispiele noch näher erläutert werden. Selbstverständlich können auch beide Ausführungsbeispiele in einem einzigen Fahrerassistenzsystem 2 realisiert werden und Eigenschaften lassen sich, soweit sinnvoll, austauschen.

Als erstes Ausführungsbeispiel sei ein "Fahrdynamiktrainer" näher erläutert. Mit jenem ist es möglich, auf einer Auswahl von vorbestimmten Strecken, insbesondere von Rennstrecken, die Fahrdynamik des eigenen Kraftfahrzeugs 1 besser erfahren zu können. Daher liegen für diese ausgewählten Strecken Streckendaten vor, die an das Steuergerät 3 des Fahrerassistenzsystems 2 übergeben werden können. Beispielsweise können diese Streckendaten für die entsprechende Strecke auch über das Internet heruntergeladen und dann über ein Interface an das Kraftfahrzeug 1 weitergegeben werden, beispielsweise eine USB-Schnittstelle, eine DVD oder ein anderer Datenträger und dergleichen.

Die Streckendaten enthalten dabei nicht nur Daten über den räumlichen Verlauf der Strecke, sondern auch bereits weitere Informationen, im vorliegenden Beispiel insbesondere eine Ideallinie, Bremspunkte, Einlenkpunkte, Lenkvorgaben (Lenkwinkelverläufe), den idealen Bremsdruck, Gaspedalstellungen, beispielsweise zum Herausbeschleunigen aus einer Kurve, Informationen zur idealen Gangwahl und dergleichen. Diese Informationen können aus einer Fahrsimulation gewonnen werden und beispielsweise mit während einer Testfahrt aufgezeichneten Daten eines Rennfahrers oder Fahrtrainers abgeglichen werden. Hierbei sollte selbstverständlich ein vergleichbares Kraftfahrzeug verwendet worden sein. Neben all diesen Informationen enthalten die Streckendaten zudem auch eine maßgeschneiderte Fahrzeugabstimmung, also Betriebsparameter der verschiedenen Fahrzeugsysteme 5, die exakt auf diese vorbestimmte Strecke ausgelegt sind, um hier ein möglichst angenehmes Fahrgefühl für den Fahrer zur Verfügung stellen zu können. Wird der Fahrdynamiktrainer-Modus gestartet, so werden die Fahrzeugsysteme 5 allgemein zunächst anhand dieser Streckendaten für diese Strecke abgestimmt.

Während der Fahrt wird nun ständig eine Positionsbestimmung über GPS oder dGPS durchgeführt. Es kann also festgestellt werden, wo auf der vorbestimmten Strecke sich das Kraftfahrzeug 1 befindet. Während der Fahrt werden nun die Fahrempfehlungen, die den Fahrer zu einer möglichst guten Ausnutzung der Fahrzeugdynamik führen sollen, nicht nur anhand der Streckendaten und der Fahrzeugdaten 6 ermittelt, sondern es werden auch Fahrerdaten 8 berücksichtigt. Auf diese Weise wird beim Annähern des Kraftfahrzeugs 1 an den Grenzbereich auch das Fahrkönnen und der Zustand des Fahrers berücksichtigt, so dass ihm die Fahrdynamik auf eine sichere Weise nähergebracht werden kann und er eine gesteigerte Fahrzeugperformance erleben kann. Auf diese Weise lernt der Fahrer im Übrigen auch, wie er mit dem Kraftfahrzeug 1 umzugehen hat und steigert konsequenterweise sein Fahrkönnen, was im Übrigen auch dazu führen kann, dass er bei weiteren Fahrten weitere Leistungsmerkmale des Kraftfahrzeugs 1 freigeschaltet bekommen kann. Mit dem erfindungsgemäßen Verfahren ist es also auch möglich, schrittweise sich Leistungsmerkmale freizufahren.

Um so individuell auf den Fahrer eingehen zu können, ist im vorliegenden Beispiel vorgesehen, den Fahrer anhand einer im Kraftfahrzeug 1 vorgesehene Identifikationseinrichtung zu identifizieren. Beispielsweise kann hierzu ein personalisierter Schlüssel oder dergleichen verwendet werden. Auch andere Möglichkeiten, beispielsweise die Eingabe eines Codes oder die Verwendung von entsprechenden Sensoren 4 können vorgesehen sein. Dem Fahrer ist nun ein Evaluationswert zugeordnet, der vom Kraftfahrzeug 1 letztlich ständig mitgeführt wird und das Fahrkönnen des Fahrers beschreibt. Der aktuelle Zustand/das Befinden des Fahrers wird über geeignete Sensoren 4, beispielsweise Innenraumsensoren und/oder physiologische Sensoren, genauso wie über die Beobachtung seines Fahrverhaltens ständig nachverfolgt.

All dies geht in die Fahrerdaten 8 ein und ermöglicht letztlich eine perfekt an den Fahrer angepasste Hinweisgabe auf der vorbestimmten Strecke.

Als besondere Möglichkeit kann der Fahrer vor Fahrtantritt auch Konfigurationsdaten eingeben, die einen sogenannten "Arcade-Modus" aktivieren. Damit wird dem Fahrer die Möglichkeit geboten, dass das Kraftfahrzeug 1 die Regelung einiger Stellgrößen autonom durchführt. Beispielsweise kann das Kraftfahrzeug 1 die Gangwahl übernehmen, so dass sich der Fahrer nur noch auf das Beschleunigen, Bremsen und Lenken konzentrieren muss. Es sind auch Zwischenstufen denkbar, in denen der Fahrer beispielsweise durch eine triggernde Handlung den Bremspunkt oder Einlenkpunkt bestimmt, woraufhin jedoch der Bremsdruckverlauf beziehungsweise Lenkwinkelverlauf durch das Kraftfahrzeug 1 bestimmt werden. Dabei werden zur Ansteuerung bei diesen Fahreingriffen Aktoren verwendet, die ohnehin im Kraftfahrzeug 1 vorgesehen sind, beispielsweise für andere Fahrzeugsysteme 5 (Einparkassistent, Stauassistent und dergleichen).

Nicht nur konkrete Lenkeingriffe können jedoch vorgenommen werden, sondern es können auch Betriebsparameter anderer Fahrzeugsysteme 5, beispielsweise eines ESP-Systems oder dergleichen, angepasst werden. So ist es durchaus möglich, dass, um ein perfektes Fahrgefühl zu erhalten, in bestimmten Abschnitten der vorbestimmten Strecke andere Kennlinien für Gaspedal und Bremspedal sinnvoller sind, die automatisch durch das Fahrerassistenzsystem 2 vorgegeben werden können.

Als Fahrempfehlung können dabei im Übrigen, wie grundsätzlich bekannt, beispielsweise eine Ideallinie, Scheitelpunkte, Einlenkpunkte und Bremspunkte von Kurven, Lenk- und Bremsvorgaben, Schaltanweisungen oder dergleichen ausgegeben werden.

Mit einem solchen Fahrdynamiktrainer kann der Fahrer also letztlich auf sichere Weise individuell angepasst eine gesteigerte Fahrzeug- insbesondere Fahrwerksperformance erleben.

Um dieses Erlebnis noch zu verbessern, kann im Übrigen auch vorgesehen sein, dass fahrdynamisch interessante Routen anstatt der Ideallinie vorgeschlagen werden, so dass Eigenschaften des Kraftfahrzeugs 1 den Fahrer noch plausibler vermittelt werden können.

Es sei an dieser Stelle angemerkt, dass das Fahrerassistenzsystem 2 selbstverständlich auch als Parkier- und/oder Rangiertrainer eingesetzt werden kann, um den Fahrer beispielsweise in schwierigen Situationen zu unterstützen, wobei das Schulen des Fahrers zur selbsttätigen Bewältigung der Aufgabe im Fokus der ausgegebenen Fahrempfehlungen steht.

In einem zweiten Ausführungsbeispiel kann das Fahrerassistenzsystem 2 als virtueller Fahrlehrer verwendet werden. Ein solcher virtueller Fahrlehrer soll dem Fahrer interaktiv in den relevanten Fahrsituationen erklären, wie er bestimmte Optimierungskriterien 9 besonders gut verfolgen kann, beispielsweise also möglichst sparsam fahren kann, möglichst dynamisch fahren kann oder möglichst komfortabel fahren kann. Selbstverständlich sind auch andere Optimierungskriterien 9 denkbar. Der Fahrerwunsch wird dabei also als ein Optimierungskriterium 9 abgebildet. Will der Fahrer beispielsweise lernen, wie er möglichst sparsam fahren kann, können ihm als Fahrempfehlung beispielsweise Schaltempfehlungen, Empfehlungen zur Aktivierung des Segelbetriebs, ideale Gaspedalstellungen, Empfehlungen zur gezielten Nutzung von Fahrerassistenzsystemen wie ACC oder GRA und dergleichen gegeben werden. Für eine möglichst dynamische Fahrweise kann ihm beispielsweise eine Empfehlung der Konfiguration von Federung, Dämpfer, Lenkungskennlinie und dergleichen gegeben werden oder ihm können bestimmte Schaltzeitpunkte nahegelegt werden. Derartige Empfehlungen lassen sich auch bei einer gewünschten Maximierung des Fahrspaßes, des Fahrkomforts oder dergleichen verwenden.

Die Fahrempfehlungen geben dem Fahrer gegenüber in diesem Fall also an, wie der Fahrer sein durch das Optimierungskriterium 9 beschriebenes Fahrtziel am besten erreichen kann, beispielsweise wie er noch effizienter fahren kann.

Die Auswahl des Optimierungskriteriums 9 kann, beispielsweise durch ein Menü, durch den Fahrer selber erfolgen, wobei auch eine Sprachsteuerung denkbar ist. Sie kann aber auch aus den Fahrerdaten 8, beispielsweise einer Fahrstilerkennung, hergeleitet werden und dem Fahrer zur Bestätigung aktiv vorgeschlagen werden.

Neben der Information des Fahrers durch die Fahrempfehlungen kann das Fahrerassistenzsystem 2 auch die notwendigen Einstellungen vornehmen, entweder unmittelbar, während also die Information ausgegeben wird oder als Vorschlag, dem der Fahrer durch Bestätigung lediglich noch folgen muss. Beispielsweise kann das Fahrerassistenzsystem 2 dem Fahrer vorschlagen, dass die Dämpfer oder die Gaspedalkennlinie jetzt verstellt werden, worauf diese Einstellungen nach Bestätigen durch den Fahrer direkt übernommen werden.

## Patentansprüche

1. Verfahren zum Betrieb eines Fahrerassistenzsystems eines Kraftfahrzeugs, bei welchem anhand wenigstens eines Sensors die aktuelle Fahrsituation beschreibende Fahrzeugdaten ermittelt werden, unter Berücksichtigung welcher Fahrzeugdaten ein aktueller fahrdynamischer Grenzbereich des Kraftfahrzeugs ermittelt wird, der als Grundlage für eine an den Fahrer ausgebbare Fahrempfehlung verwendet wird,
**dadurch gekennzeichnet,**
**dass** der aktuelle fahrdynamische Grenzbereich und/oder die Fahrempfehlung unter Berücksichtigung von den aktuellen Zustand des Fahrers und/oder das Können des Fahrers beschreibenden Fahrerdaten und/oder von wenigstens einem einen Fahrerwunsch beschreibenden Optimierungskriterium angepasst wird, wobei eine von einer Ideallinie abweichende, fahrdynamisch interessante Route insbesondere unter Berücksichtigung von Streckendaten und/oder eines Fahrerwunsches ermittelt und bei der Ermittlung der Fahrempfehlung berücksichtigt wird.

2. Verfahren nach Anspruch 1, **dadurch gekennzeichnet, dass** der aktuelle Fahrer, dem insbesondere wenigstens ein gespeichertes, sein Fahrkönnen beschreibendes Fahrerdatum, insbesondere ein Evaluationswert, zugeordnet ist, über eine Identifikationseinrichtung identifiziert wird und/oder wenigstens ein oder das das Fahrkönnen des Fahrers beschreibendes Fahrerdatum unter Berücksichtigung einer Eingabe und/oder einer Fahrerhistorie ermittelt wird.

3. Verfahren nach Anspruch 1 oder 2, **dadurch gekennzeichnet, dass** den Zustand des Fahrers beschreibende Fahrerdaten durch Auswertung von Sensordaten, insbesondere von Daten einer Innenraumkamera und/oder physiologischen Sensoren und/oder akustischen Sensoren, und/oder von aktuellen Einstellungen und/oder Eingaben des Fahrers und/oder von einer einen vorbestimmten Zeitbereich vor dem aktuellen Zeitpunkt umfassenden Fahrerhistorie ermittelt werden.

4. Verfahren nach einem der vorangehenden Ansprüche, **dadurch gekennzeichnet, dass** in Abhängigkeit des fahrdynamischen Grenzbereichs und/oder der Fahrerdaten die Fahrzeugleistung betreffende Betriebsparameter des Kraftfahrzeugs, insbesondere die Motorleistung und/oder Fahrwerkseinstellungen und/oder wenigstens eine Kennlinie eines Pedals und/oder das Bremsverhalten, angepasst werden.

5. Verfahren nach einem der vorangehenden Ansprüche, **dadurch gekennzeichnet, dass** bei Befahren einer vorbestimmten Strecke in dem Kraftfahrzeug gespeicherte streckenspezifische Streckendaten und aktuelle Positionsdaten, insbesondere GPS- oder dGPS-Daten, zur Ermittlung des aktuellen fahrdynamischen Grenzbereichs und/oder der Fahrempfehlung berücksichtigt werden.

6. Verfahren nach Anspruch 5, **dadurch gekennzeichnet, dass** wenigstens ein Teil der Streckendaten in einer Simulation und/oder einer Testfahrt ermittelt wurden.

7. Verfahren nach einem der vorangehenden Ansprüche, **dadurch gekennzeichnet, dass** wenigstens ein einer Fahrempfehlung entsprechender Fahreingriff wenigstens teilweise, insbesondere abhängig von einem vor der aktuellen Fahrt durch den Fahrer definierten Konfigurationsparameter, kraftfahrzeugseitig automatisch durchgeführt wird und/oder während der Fahrt eine Anpassung von Betriebsparametern unter Berücksichtigung von Fahrzeugdaten und/oder Streckendaten und/oder des Optimierungskriteriums automatisch erfolgt und/oder dem Fahrer als Option vorgeschlagen wird.

8. Verfahren nach einem der vorangehenden Ansprüche, **dadurch gekennzeichnet, dass** wenigstens ein Optimierungskriterium durch einen Fahrer ausgewählt wird und/oder anhand der Fahrerdaten ermittelt und ausgewählt wird, insbesondere nach einer Bestätigung durch den Fahrer.

9. Verfahren nach einem der vorangehenden Ansprüche, **dadurch gekennzeichnet, dass** als ein zur Ausgabe der Fahrempfehlung oder einer daraus abgeleiteten Information geeignetes Darstellungsmittel eine Projektionseinrichtung verwendet wird, die die Fahrempfehlung oder eine daraus abgeleitete Information auf die Straße vor dem Kraftfahrzeug projiziert.

## Claims

1. Method for operating a driver assistance system of a motor vehicle, in which vehicle data indicating the current driving situation are determined by means of at least one sensor, a current driving dynamics limit range for the motor vehicle, used as a basis for a driving recommendation that can be output to the driver, is determined taking into account said vehicle data,
**characterised in that**
the current driving dynamics limit range and/or the driving recommendation is/are adapted taking into account the current state of the driver and/or driving data indicating driver ability and/or at least one optimisation criterion indicating driver intention, a route which is of interest from a driving dynamics perspective and which deviates from an ideal line being determined taking into particular account course data and/or driver intention and being taken into account upon determination of the driving recommendation.

2. Method according to claim 1, **characterised in that** the current driver, to whom in particular at least one stored driver datum indicating his driving ability, in particular an evaluation value, is assigned, is identified by means of an identification device and/or at least one or the driver datum indicating driver driving ability is determined taking into account an input and/or driver history.

3. Method according to either claim 1 or claim 2, **characterised in that** the driver data indicating the state of the driver are determined by analysing sensor data, in particular data from an interior camera and/or physiological sensors and/or acoustic sensors, and/or current settings and/or inputs from the driver and/or a driver history covering a predetermined time period prior to the present point in time.

4. Method according to any of the preceding claims, **characterised in that** the motor vehicle operating parameters relating to vehicle performance, in particular engine performance and/or chassis settings and/or at least one pedal characteristic curve and/or braking performance, are adapted depending on the driving dynamics limit range and/or driver data.

5. Method according to any of the preceding claims, **characterised in that**, when travelling along a predetermined course, course-specific course data stored in the motor vehicle and current position data, in particular GPS or dGPS data, are taken into account for determining the current driving dynamics limit range and/or the driving recommendation.

6. Method according to claim 5, **characterised in that** at least some of the course data are determined in a simulation and/or test drive.

7. Method according to any of the preceding claims, **characterised in that** at least one driving intervention amounting to a driving recommendation is carried out automatically by the motor vehicle at least in part, in particular on the basis of a configuration parameter defined by the driver prior to the current journey, and/or, during the journey, operating parameters are automatically adapted taking into account vehicle data and/or course data and/or the optimisation criterion and/or such an adaptation is offered to the driver as an option.

8. Method according to any of the preceding claims, **characterised in that** at least one optimisation criterion is selected by a driver and/or determined and selected on the basis of driver data, in particular following confirmation by the driver.

9. Method according to any of the preceding claims, **characterised in that** a projection device is used as a display means suitable for outputting either the driving recommendation or information derived therefrom and projects the driving recommendation or information derived therefrom onto the road in front of the motor vehicle.

## Revendications

1. Procédé de fonctionnement d'un système d'assistance au conducteur d'un véhicule automobile, dans lequel on détermine au moyen d'au moins un capteur les données du véhicule décrivant la situation de conduite actuelle, lesquelles données du véhicule permettent de déterminer une zone limite actuelle du véhicule automobile en dynamique de conduite, qui est utilisée comme base pour une recommandation de conduite délivrable au conducteur,
**caractérisé en ce que** :
la zone limite actuelle en dynamique de conduite et/ou la recommandation de conduite est ou sont ajustées en tenant compte de l'état actuel du conducteur et/ou de données de conducteur décrivant la capacité du conducteur et/ou d'au moins un critère d'optimisation décrivant un souhait du conducteur, dans lequel on détermine une route intéressante en dynamique de conduite s'écartant d'une ligne idéale, en particulier en tenant compte des données de circulation et/ou d'un souhait du conducteur, et on en tient compte dans la détermination de la recommandation de conduite.

2. Procédé selon la revendication 1, **caractérisé en ce que** le conducteur actuel, auquel est affectée en particulier au moins une donnée de conducteur mémorisée décrivant sa capacité de conduite, en particulier une valeur d'évaluation, laquelle est identifiée par un dispositif d'identification, et/ou au moins une ou la donnée de conducteur décrivant la capacité de conduite du conducteur est déterminée en tenant compte d'une entrée et/ou d'un historique du conducteur.

3. Procédé selon la revendication 1 ou la revendication 2, **caractérisé en ce que** l'on détermine des données de conducteur décrivant l'état du conducteur par évaluation de données de capteur, en particulier de données d'une caméra dans l'espace interne et/ou de capteurs physiologiques et/ou de capteurs acoustiques, et/ou de réglages actuels et/ou d'entrées du conducteur et/ou d'un historique du conducteur comprenant une plage temporelle prédéterminée avant le moment actuel.

4. Procédé selon l'une quelconque des revendications précédentes, **caractérisé en ce que** des paramètres de fonctionnement du véhicule automobile concernant la capacité du véhicule, en particulier, la capacité du moteur et/ou les réglages du mécanisme de roulement et/ou au moins une caractéristique d'une pédale et/ou le comportement au freinage est ou sont adaptés en fonction de la zone limite en dynamique de conduite et/ou des données du conducteur.

5. Procédé selon l'une quelconque des revendications précédentes, **caractérisé en ce que**, lors du parcours d'une voie prédéterminée, on tient compte des données de circulation spécifiques aux voies mémorisées dans le véhicule automobile et des données de position actuelles, en particulier des données GPS ou dGPS, pour déterminer la zone limite en dynamique de conduite actuelle et/ou la recommandation de conduite.

6. Procédé selon la revendication 5, **caractérisé en ce qu'**au moins une partie des données de circulation a été déterminée dans une simulation et/ou un parcours d'essai.

7. Procédé selon l'une quelconque des revendications précédentes, **caractérisé en ce qu'**au moins un engagement de conduite correspondant à une recommandation de conduite est réalisé automatiquement côté véhicule automobile au moins en partie, en particulier en fonction d'un paramètre de configuration défini avant le parcours actuel par le conducteur et/ou, au cours du parcours, un ajustement de paramètres de fonctionnement se fait automatiquement en tenant compte de données de véhicule et/ou de données de circulation et/ou du critère d'optimisation et/ou est proposé au conducteur en option.

8. Procédé selon l'une quelconque des revendications précédentes, **caractérisé en ce qu'**au moins un critère d'optimisation est choisi par un conducteur et/ou est déterminé et choisi au moyen des données de conducteur, en particulier après une confirmation par le conducteur.

9. Procédé selon l'une quelconque des revendications précédentes, **caractérisé en ce que** l'on utilise comme moyen de représentation approprié pour délivrer la recommandation de conduite ou une information qui en est tirée, un dispositif de projection qui projette la recommandation de conduite ou une information qui en est tirée sur la rue devant le véhicule automobile.
